# EUROPEAN PATENT SPECIFICATION

(11) **EP 4 303 120 B1**
(45) Date of publication and mention of the grant of the patent: **17.06.2026**
(21) Application number: 22382649.6
(22) Date of filing: 07.07.2022
(51) Int. Cl.: B64C 3/20, B64C 5/02, B64F 5/10

(54) **COMPOSITE MULTI-SPAR AIRCRAFT LIFTING SURFACE**
MEHRHOLMIGE FLUGZEUGTRAGFLÄCHE AUS VERBUNDWERKSTOFF
SURFACE SUSTENTATRICE D'AÉRONEF EN MATÉRIAU COMPOSITE COMPRENANT PLUSIEURS LONGERONS

(43) Date of publication of application: 10.01.2024
(73) Proprietor: Airbus Operations S.L.U., 28906 Getafe, Madrid (ES)
(72) Inventor: Linares Villegas, Mario, 28906 Getafe (ES); Álvarez Llorián, Paula, 28906 Getafe (ES); Parra Villacorta, Francisco José, 28906 Getafe (ES); Galli, Marina, 28906 Getafe (ES); Kadiri Moreno, Alain, 28906 Getafe (ES); Gómez del Valle, Javier Carlos, 28906 Getafe (ES); Kobierecki, Robert, 28906 Getafe (ES); Avilés Torregrosa, María Beatriz, 28906 Getafe (ES); García Blanco, María José, 28906 Getafe (ES); Postigo Rodríguez, Ángel, 28906 Getafe (ES)
(74) Representative: Elzaburu S.L.P.

(56) References cited:
- DE-A1- 19 841 799
- GB-A- 2 268 461
- KR-A- 20190 052 414
- "Integrally cocured structure", 1 January 2004, ELSEVIER, ISBN: 978-1-85-617415-2, article F. C. CAMPBELL: "Integrally cocured structure", pages: 290 - 299, XP055048953

## Description

### FIELD OF THE INVENTION

The present invention is directed to the manufacture of aircraft lifting surfaces such as horizontal tail planes (HTP) or wings. The invention allows the complete integration of a tip-to-tip composite torsion box.

### BACKGROUND OF THE INVENTION

It is known that lifting surface architectures for aircraft comprise two swept torsion boxes, a lateral right side and lateral left side, with a central joint at the aircraft centerline. Each lateral side is located with respect to a longitudinal direction of the torsion box. Said longitudinal direction is contained in a symmetry plane of the torsion box. Once assembled in an aircraft, the longitudinal direction of the torsion box may be comprised in a vertical longitudinal plane of symmetry of the aircraft's envelope.

The torsion box also includes a first face and a second face spaced in a Z-direction of the torsion box comprising skin panels forming the first face and the second face. The Z-direction may be orthogonal to the longitudinal direction.

The first face may correspond to an upper face or suction side of the airfoil and the second face may correspond to a lower face or pressure side of the airfoil or the other way around.

Eventually, a central torsion box is used instead of a central joint depending on the aircraft architecture.

The most widespread structure for a torsion box is formed by front and rear spars and a plurality of ribs transversally arranged and fitted to front and rear spars, such as to form a box-like configuration. The torsion box also includes upper and lower skin panels internally reinforced by stringers. The main functions of the ribs are to provide torsional rigidity, longitudinally limit the skins and the stringers so as to discretize buckling loads, maintain the shape of the aerodynamic surface and support local load introductions resulting from actuator fittings, support bearings, and similar devices, which are directly secured to the front and rear ribs.

It is also known the multi-spar torsion box structure wherein the ribs are dispensed with, and several spars are introduced for creating closed cells in order to replace the functions of the ribs of the previous design. The spars are located in the lateral left side and in the lateral right side and run spanwise. The multi-spar torsion box is manufactured with modular tooling which is combined in different manners in order to simplify its demolding.

Several proposals have been developed for a composite fiber reinforced polymer Horizontal Tail Plane (HTP) based on a tip-to-tip torsion box wherein both the lateral left side and the lateral right side are integrated with a continuous skin made as a single part.

Integrated means that the individual elements are cured together as a result forming a single piece comprising all the individual elements.

The proposed invention aims to simplify an integrated tip to tip and multi-spar concepts, solving the disadvantages that they present and combining their advantages.

Prior art document KR20190052414 discloses a manufacturing method for an aircraft integrated horizontal stabilizer including: a first step of preparing a mold; a second step of using an automatic stacking device, cutting, heating and pressurizing a thermoplastic carbon fiber tape on the mold, and directly manufacturing a preform of the light aircraft horizontal stabilizer having a set shape and thickness on the mold. And a third step of inserting the preform of the light aircraft horizontal stabilizer into a microwave oven to densify a structure of the preform of the light aircraft horizontal stabilizer.

A publication from F.C. Campbell entitled 'Manufacturing Processes for Advanced Composites' (ISBN No. 978-1-85-617415-2) discloses in section 8.15 an integrally cocured composite structure. The structure is a control surface of an aircraft.

### SUMMARY OF THE INVENTION

The invention enables the manufacture of an integrated multi-spar torsion box which allows for a high degree of automation in manufacturing and assembly.

In a first aspect of the invention, a composite multi-spar aircraft lifting surface is defined, according to claim 1.

The torsion box of the composite multi-spar aircraft lifting surface comprises:
- a first portion of the skin being continuous on the second face from a right tip of the lateral right side to a left tip of the lateral left side,
- a second portion of the skin being continuous on the lateral right side of the first face, from the right tip to a first central portion of the torsion box,
- a third portion of the skin being continuous on the lateral left side of the first face, from the left tip to a second central portion of the torsion box,
- a cover spanning at least partially between the first central portion and the second central portion of the torsion box. In a shown embodiment, the cover spans between the first central portion and the second central portion across the whole length of the chord. It is also possible for the cover to span between the first central portion and the second central only partially along the length of the chord.

The spars, the first portion of the skin, the second portion of the skin and the third portion of the skin are an integrated multi-cell part, i.e., these elements are configured in one piece. The spars, the first portion of the skin, the second portion of the skin and the third portion of the skin are integral and represent functional portions of an integrated part.

Continuous means that it is made in one piece, i.e., cured together as a sole piece. Therefore, each cell of the multicell structure is formed by two consecutive spars and the upper and lower skins that are continuous.

An opening exists in the first face between the first central portion and the second central portion which is closed by the cover.

This invention presents a composite tip-to-tip and multi-spar torsion box structure in a single part for a lifting surface, for instance, a horizontal tail plane (HTP). It includes a multi-cell structure of spars and skins extending along the complete span. The claimed invention removes the conventional central joint and allows a better access to the inside of the torsion box than a multi-spar configuration simplifying installation and allowing high automatization.

The opening between the second portion of the skin and the third portion of the skin, i.e., the opening between the first central portion and the second central portion, which is subsequently occupied by the cover, allows access to the inside of the torsion box. As a result, a modular tooling manufacturing concept allowing the removal of the internal tooling from the manufactured torsion box through the mentioned opening is provided.

The spars, the first portion of the skin, the second portion of the skin and the third portion of the skin are configured as an integrated multi-cell structure in one piece. Thus, by any manual or automatic process the plies are stacked, the tooling is located within the structure of the torsion box and the whole structure is consolidated by applying a single pressure and temperature cycle.

The claimed invention offers the following advantages:
- Greater integration.
- Removal of lifting surface central joint.
- Skin optimization at the central zone thanks to the continuous skins that allows a better load transmission.
- High automatic riveting.
- Better access to the inside of the torsion box than conventional multi-spar lifting surfaces reducing assembly time.
- Reduction of the number of fasteners that leads to a reduction in weight and assembly time.
- Automatic riveting for cover installation by means of High Strength Blind Fasteners.
- Access to the inside of the torsion box thanks to the opening left between the second portion of the skin and the third portion of the skin wherein the cover is located afterwards. This access can be placed indistinctly in the upper or in the lower skins and its size can be adapted to the tooling and assembly needs. The mentioned access allows:
   ∘ Removing tooling after curing.
   ∘ Access for fitting, ribs and system installation.
   ∘ Access for inspections after curing.

In a second aspect of the invention, a manufacturing method is proposed as defined in claim 13.

It comprises inter alia the following steps:
- in a first step, manufacturing the torsion box as an integrated multi-cell part comprising:
   ∘ the spars,
   ∘ a first portion of the skin being continuous on the second face from a right tip of the lateral right side to a left tip of the lateral left side,
   ∘ a second portion of the skin being continuous on the lateral right side of the first face, from the right tip to a first central portion of the torsion box, and
   ∘ a third portion of the skin being continuous on the lateral left side of the first face, from the left tip to a second central portion of the torsion box, leaving an opening in the skin between the first central portion and the second central portion. The opening is configured to provide access to the integrated multi-cell part,
- in a second step, fastening a cover spanning at least partially onto the opening.

### DESCRIPTION OF THE FIGURES

To complete the description and to provide for a better understanding of the invention, a set of drawings is provided. Said drawings form an integral part of the description and illustrate preferred embodiments of the invention. The drawings comprise the following figures.
Figure 1 shows a perspective view of a torsion box of a horizontal tail plane according to an embodiment of the invention.
Figure 2 shows a schematic span section of the torsion box of figure 1.
Figure 3 shows a schematic partial chord section A-A of a lateral side of the torsion box according to the embodiment of figure 1 showing the cover and the spars located underneath.
Figure 4 shows a schematic partial span section B-B of an embodiment of a spar, a second portion of a skin located in the lateral right side of a torsion box and a portion of a cover.
Figure 5 shows a schematic partial plan view of another embodiment of the spars, the second portion of a skin located in the lateral right side of a torsion box and a portion of a cover.
Figure 6 shows a schematic partial span section B-B of the embodiment of figure 5.
Figure 7 shows an embodiment of the assembly sequence of the embodiment shown in figure 6.
Figure 8 shows a schematic partial plan view of another embodiment of the spars, the second portion of a skin located in the lateral right side of a torsion box and a portion of a cover.
Figure 9 shows a schematic partial span section B-B of the embodiment of figure 8.
Figure 10 shows a schematic span section C-C of an embodiment of a central rib of a torsion box.
Figure 11 shows a schematic span section C-C of another embodiment for the central rib of a torsion box.
Figure 12 shows an embodiment of the assembly sequence of the central rib of the embodiment shown in figure 11.
Figure 13 shows an embodiment of the demolding process in a schematic span section A-A of a torsion box.
Figure 14 shows an embodiment of the demolding process in a schematic partial chord section B-B of a lateral side of the torsion box showing the opening and the spars located underneath.

### DETAILED DESCRIPTION OF THE INVENTION

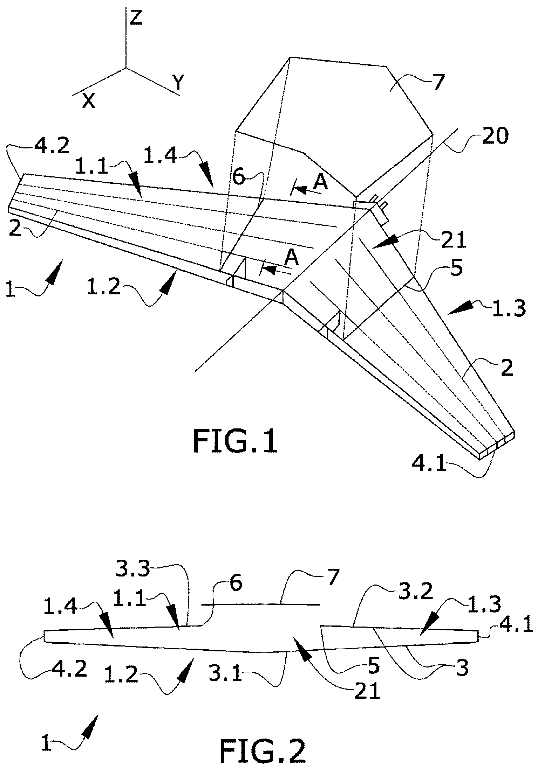

Figures 1 and 2 disclose an embodiment of the invention. The composite multi-spar aircraft lifting surface comprises an integrated torsion box (1) having:
- A first face (1.1) and a second face (1.2) spaced in a Z-direction of the torsion box (1). The first face (1.1) would be the upper side and the second face (1.2) would be the lower side.
- A lateral right side (1.3) and a lateral left side (1.4) on each side of a longitudinal direction (20).

The shown torsion box (1) comprises:
- spars (2) located in the lateral left side (1.4) and in the lateral right side (1.3) and running spanwise, and
- a skin (3).

More specifically, the torsion box (1) comprises the skin (3) configured as follows:
- A first portion of the skin (3.1) being continuous and located in the second face (1.2) of the torsion box (1). It may be located in the upper side or in the lower side of the torsion box (1). The first portion of the skin (3.1) spans from a right tip (4.1) of the lateral right side (1.3) to a left tip (4.2) of the lateral left side (1.4) of the torsion box (1).
- A second portion of the skin (3.2) located in the lateral right side (1.3) of the first face (1.1). This second portion of the skin (3.2) is located in the upper side if the first portion of the skin (3.1) running tip-to-tip is located in the lower side, for instance. The second portion of the skin (3.2) spans from the right tip (4.1) of the lateral right side (1.3) to a first central portion (5) of the span of the torsion box (1).
- A third portion of the skin (3.3) located in the lateral left side (1.4) of the first face (1.1). Equally, this third portion of the skin (3.3) is located in the first face (1.1) of the torsion box (1) as the second portion of the skin (3.2). The third portion of the skin (3.3) spans from the left tip (4.2) of the lateral left side (1.4) to a second central portion (6) of the span of the torsion box (1).
- A cover (7) spanning between the first central portion (5) and the second central portion (6) of the span of the torsion box (1).

The opening (21) between the first central portion (5) and the second central portion (6) is configured for providing access to the multi-cell structure of the torsion box (1), during some steps of the manufacturing, and is closed with the cover (7) towards the end of the manufacturing process. Such access may also be of use in maintenance or repair tasks of the aircraft.

As previously stated, the spars (2), the first portion of the skin (3.1), the second portion of the skin (3.2) and the third portion of the skin (3.3) are configured as an integrated multi-cell part in one piece. Thus, the manufactured torsion box (1) comprises two pieces, the integrated multi-cell structure and the cover (7) that closed the access to the inside of the integrated multi-cell structure.

In the shown embodiment, the opening (21) between the first central portion (5) and the second central portion (6), and therefore the cover (7), is symmetrically located with respect to a longitudinal direction (20) of the torsion box (1).

In an embodiment, the cover (7) is joined to the spars (2) by fastening means, for instance, by rivets.

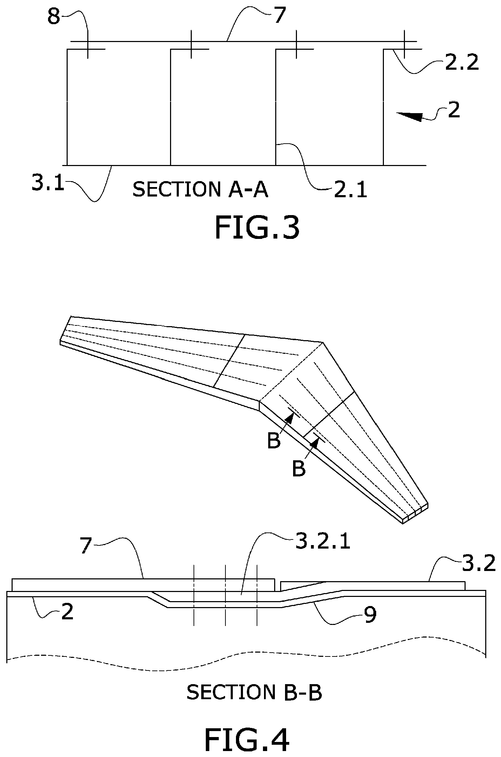

Figure 3 discloses an embodiment of the spars (2) of the torsion box (1) and their joint to the cover (7).

At least one spar (2) has an L-shaped cross-section comprising a web (2.1) and a lateral flange (2.2) extending laterally from the web (2.1). The chord length of the flange (2.2) is smaller than a chordwise distance between said spar (2) and a consecutive spar (2) in the direction of the lateral flange (2.2).

In the shown embodiment, in the opening (21) between the first central portion (5) and the second central portion (6) the chord length of the flanges (2.2) is smaller than the distance between consecutive spars (2). For instance, the chord length of the flanges (2.2) is approximately less than half the distance between consecutive spars (2). The gap between the flanges (2.2) and the next spar (2) allows the extraction of a tooling as it will be explained below. In the shown embodiment, the cover (7) is fastened to the flanges (2.2) of the spars (2). This configuration allows an automatic riveting by, for example, High-Strength (HS) Blind Fasteners.

Alternatively, the spars (2) may have a T-shape or L-shape but towards each other such that a gap is formed between the respective edges of the flanges.

Figures 4 to 9 show different embodiments for the joint between the cover (7) and the second portion of the skin (3.2) or the third portion of the skin (3.3).

It has to be noted that there is a mechanical discontinuity between the second portion of the skin (3.2) and the cover (7) and between the third portion of the skin (3.3) and the cover (7). In an embodiment, they are adapted to each other so as to form an aerodynamically continuous skin.

Figure 4 discloses an integrated solution for the cover (7) and the skin portion adjacent to the first central portion (5).

The second portion of the skin (3.2) and/or the third portion of the skin (3.3) comprises a sloped section (9) along the span direction. More particularly, the sloped section (9) is performed towards the center of the torsion box (1), i.e., towards the opposite direction of the cover (7).

Therefore, an edge (3.2.1) of the second portion of the skin (3.2) adjacent to the first central portion (5) or an edge of the third portion of the skin (3.3) adjacent to the second central portion (6) is located between an edge of the cover (7) and one or more spars (2). Thus, the cover (7) is joined to, respectively, the second portion of the skin (3.2) and/or the third portion of the skin (3.3) at the sloped section (9).

The slope (9) is a smooth slope so that it does not interfere with the demolding process. This embodiment ensures continuity and a good transfer of loads between parts.

In the shown embodiment, the spar (2) also comprises a sloped section along the span direction.

As previously stated, although the embodiment shown in figure 4 discloses the second portion of the skin (3.2), the integrated solution for the cover (7) and the skin portion may also be applied to the second central portion (6) involving the third portion of the skin (3.3), its corresponding spars (2) and the cover (7).

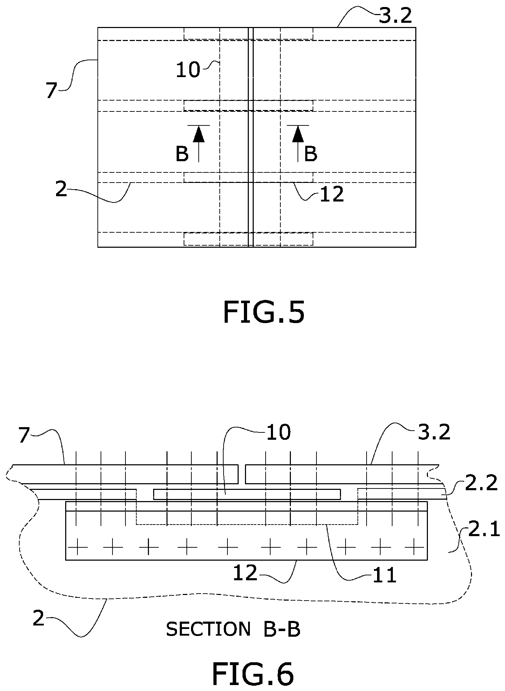

Figures 5 to 9 disclose a different embodiment wherein the cover (7) is fastened by, for instance, rivets. The embodiment comprises a strap (10), for instance, a butt strap, located in the chordwise direction of the torsion box (1).

The strap (10) is joined at the first central portion (5) by fastening means to:
- the cover (7), and
- the second portion of the skin (3.2).

In the shown embodiment, the strap (10) is located at the first central portion (5) of the torsion box (1) at the interface between the cover (7) and the second portion of the skin (3.2). Likewise, the strap (10) may also be located at the second central portion (6) of the torsion box (1) at the interface between the cover (7) and the third portion of the skin (3.3).

Figures 5 and 6 disclose an embodiment wherein the spars (2) comprise a recess (11) in the Z-direction along its span direction. The Z-direction of the torsion box (1) is perpendicular to the span and the chord directions of the torsion box (1).

The strap (10) is located in the recesses (11) of the spars (2). Therefore, the cross-section of the strap (10) is located between the spars (2) and a portion of the cover (7) and the second portion of the skin (3.2) or the third portion of the skin (3.3).

In the shown embodiment, the torsion box (1) comprises a stiffener (12) joined to the spar (2) along the span direction and adapted for stiffening the spar (2).

The stiffener (12) is longitudinally joined to the spar (2) in the span direction and partially covers the recess (11) in the Z-direction of the spar (2) for stiffening the spar (2). Thus, the stiffener (12) reduces the size of the recess (11) and reinstates the stiffness of the spar (2).

Therefore, the recess (11) is deeper than the thickness of the strap (10) in the Z-direction and the stiffener (12) is fastened such that the strap (10) is pressed between the stiffener (12) and a portion of the cover (7) and the second portion of the skin (3.2).

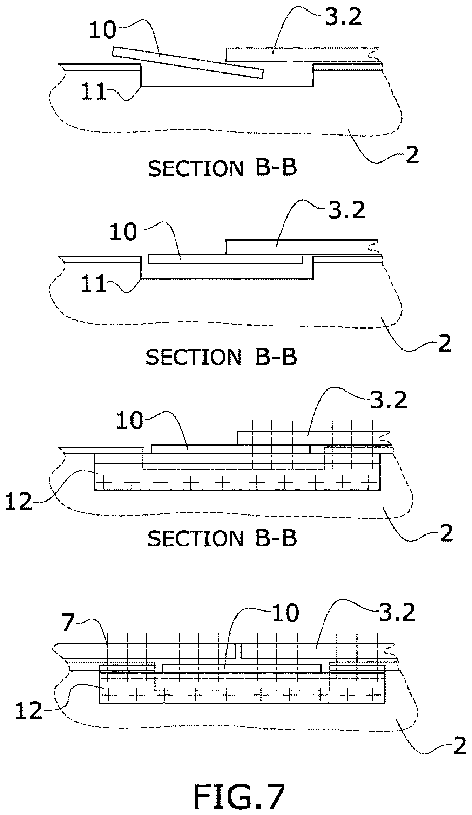

The function of an oversized recess (11) is to provide space for the strap (10) to be positioned in the recess (11) during the manufacturing process. This can be seen in the manufacturing sequence of figure 7. It has to be noted that the spars (2), the first portion of the skin (3.1) and the second portion of the skin (3.2) are configured as an integrated multi-cell part in one piece. Therefore, the strap (10) needs to be introduced in the space between the second portion of the skin (3.2) and the recess (11) of the spar (2). The second portion of the skin (3.2) is cantilevered over the recess (11) of the spar (2). In order for the strap (10) to maneuver, the size of the recess (11) needs to be oversized with respect to the cross-section of the strap (10).

The stiffener (12) may be joined to the cover (7) or alternatively to the second portion of the skin (3.2) or to the third portion of the skin (3.3). In an additional alternative, it can also be joined to the strap (10).

More specifically, the recess (11) is deeper than the thickness of the strap (10) in the Z-direction. The stiffener (12) is located such that the strap (10) is adjacent to the stiffener (12) and fastened to it.

The assembly sequence of the strap (10) is shown in figure 7:
a) The strap (10) is introduced and installed through the cover (7) access, i.e., through the opening (21) between the first central portion (5) and the second central portion (6). At this stage the cover (7) is not yet installed.
b) A stiffener (12) is introduced and installed below the strap (10) and along a spar (2).
c) The cover (7) is installed and attached with, for instance, blind rivets.

Some attachments may be common to the attachment of the skin (3.2), the cover (7), the strap (10) and the stiffener (12), thereby joining there three parts together at once. Some other attachments may be common to the attachment of the skin (3.2), the cover (7), the spar (2) and the stiffener (12), thereby joining there three parts together at once.

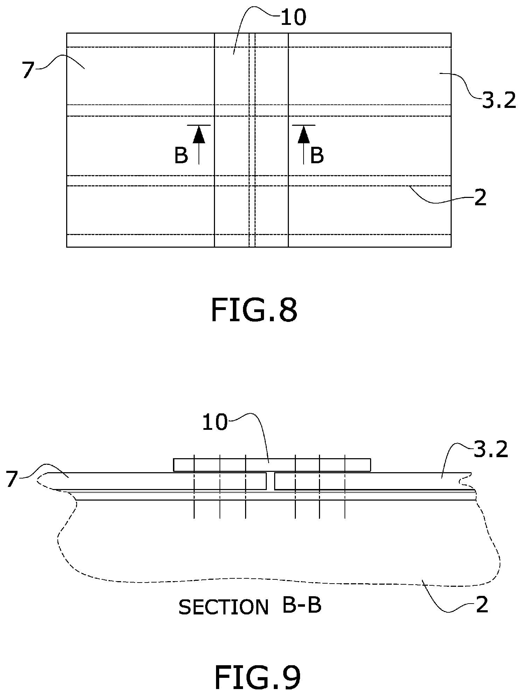

Figures 8 and 9 show another embodiment for the joint between the cover (7) and the adjacent portions of the skin (3). This embodiment is preferred when the joint is performed inside the fuselage of the aircraft. This embodiment simplifies the joint due to the absence of aerodynamic requirements as it is installed inside the fuselage. For this reason, the strap (10) can be installed outside the torsion box (1).

In this embodiment, the cover (7) and second portion of the skin (3.2) or the third portion of the skin (3.3) are located between the strap (10) and the spar (2) in the Z-direction.

As previously stated, although the embodiment shown in figures 4 to 9 discloses the second portion of the skin (3.2), the joint between the cover (7) and the adjacent portion of the skin (3) may also be applied to the second central portion (6) involving the third portion of the skin (3.3), its corresponding spars (2) and the cover (7).

The claimed invention also has the advantage that the central joint of the torsion box (1) is optimized. Thanks to the continuous skin (3) on both sides, upper side and lower side, it is not necessary to transfer the entire load between the right and left torsion boxes (1), as is the case in a typical central joint. This allows a lighter central rib (13), lighter skins (3) in the central portion of the torsion box (1) and reduces the number of fasteners.

Thus, the torsion box (1) comprises a rib (13) located between the lateral right side (1.3) and the lateral left side (1.4) of the torsion box (1). In the shown embodiment, the rib (13) extends longitudinally chordwise. In the shown embodiment, the rib (13) has a double-T shape, although other shapes are possible.

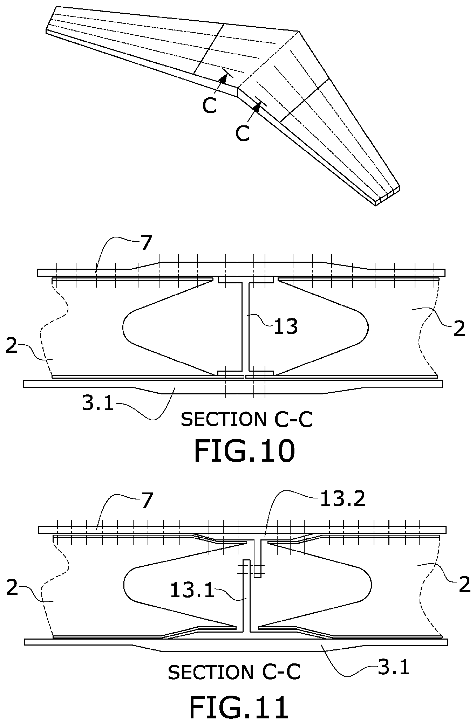

In the embodiment shown in figure 10, the rib (13) is fastened to the cover (7) and to the first portion of the skin (3.1). More specifically, one of the flanges of the rib (13) is riveted to the cover (7) and the other flange is riveted to the continuous skin tip-to-tip.

Figure 11 shows another embodiment for the rib (13). The rib (13) comprises at least two portions:
- a first T-shaped portion (13.1) configured as part of the integrated multi-cell part together with the spars (2) and the first portion of the skin (3.1), and
- a second T-shaped portion (13.2) fastened to the cover (7) and to the first T-shaped portion (13.1).

The first T-shaped portion (13.1) may be formed fresh together with the spars (2) and the first portion of the skin (3.1) and thus be integral with the first portion of the skin (3.1) and spars (2). The second T-shaped portion (13.2) is added and attached afterwards to first allow extraction of the tooling from within the integrated one-piece structure.

This second embodiment for the rib (13) has the advantage of less fasteners, although the manufacturing process is more complex.

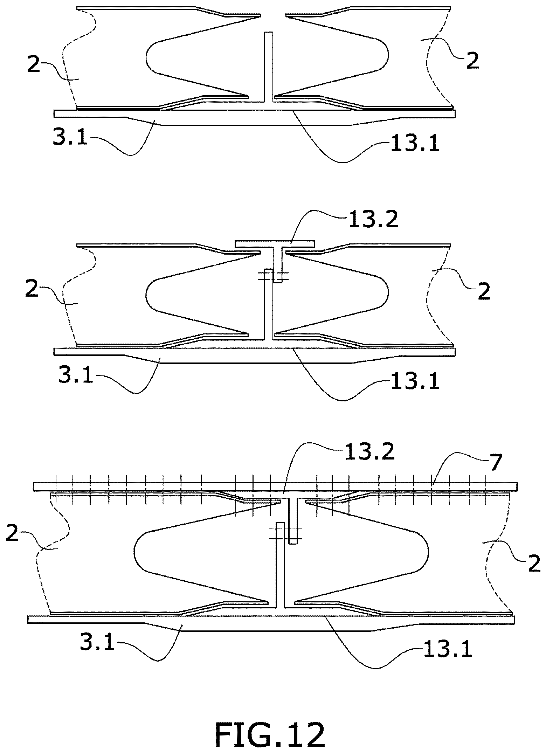

Figure 12 shows the assembly sequence:
➢ In a first step, the first T-shaped portion (13.1), the spars (2) and the first portion of the skin (3.1) are co-cured.
➢ In a second step, the second T-shaped portion (13.2) is fastened to the first T-shaped portion (13.1).
➢ In a third step, the cover (7) is fastened to the spars (2) and to the second T-shaped portion (13.2), for instance, with blind fasteners.

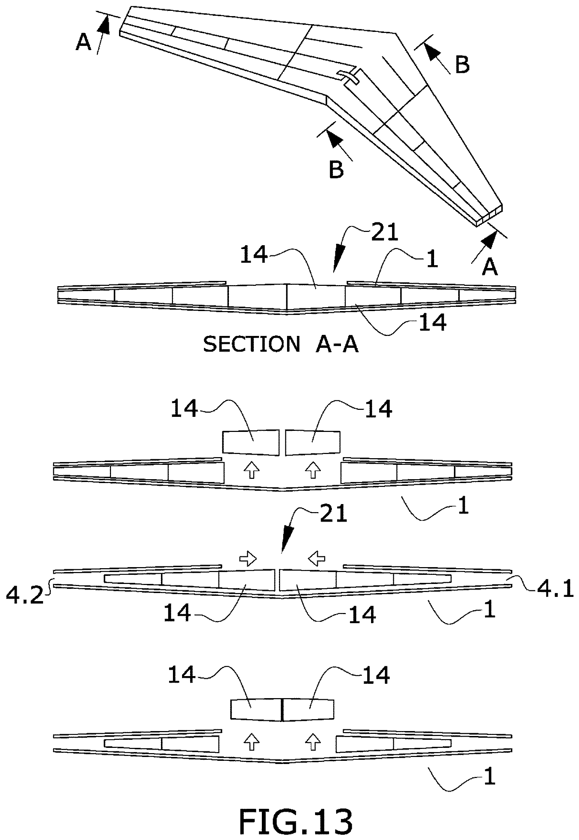

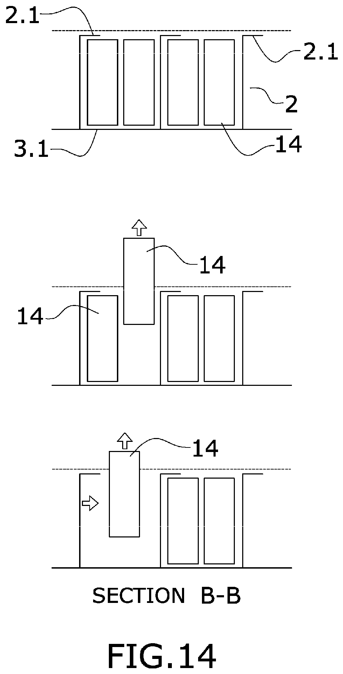

Figures 13 and 14 disclose an embodiment of the demolding process of the torsion box (1).

Figure 13 discloses an embodiment of the demolding process. The method comprising the following steps:
- providing a set of consecutive longitudinal tooling modules (14) located between adjacent spars (2), such that the set of consecutive longitudinal tooling modules (14) extends along the span of the torsion box (1),
- curing the integrated multi-cell part,
- removing through the opening (21) at least one of the consecutive longitudinal tooling modules (14) located between the first central portion (5) and the second central portion (6), i.e., located under the opening (21),
- displacing in the span direction at least a next consecutive longitudinal tooling modules (14) towards the opening (21) between the first central portion (5) and the second central portion (6),
- removing through the opening (21) the displaced consecutive longitudinal tooling module (14), said module (14) being located under the opening (21),
- repeating the displacing and removing sequence until all the longitudinal tooling modules (4) have been removed through the opening (21), i.e., between the first central portion (5) and the second central portion (6).

Therefore, the consecutive longitudinal tooling modules (14) are displaced, for instance pushed, in the span direction towards the opening (21) between the first central portion (5) and the second central portion (6). The process is repeated several times until all the longitudinal tooling modules (14) have been removed through the opening (21) provided between the first central portion (5) and the second central portion (6).

In an embodiment, there could also be an access to the longitudinal tooling modules (14) through the right tip (4.1) and/or the left tip (4.2) zone of the torsion boxes (1) to push the consecutive longitudinal tooling modules (14) into the opening (21) between the first central portion (5) and the second central portion (6).

Figure 14 discloses a chord section performed in the opening (21) between the first central portion (5) and the second central portion (6). At least one spar (2) has an L-shaped cross-section comprising a web (2.1) and a lateral flange (2.2) extending laterally from the web (2.1), the chord length of the flange (2.2) being smaller than a chordwise distance between said spar (2) and a consecutive spar (2) in the direction of the lateral flange (2.2). In the shown embodiment, three spars (2) are depicted.

A span schematic view is included in figure 14. At least two longitudinal tooling modules (14) are located between two consecutive spars (2) in the chord direction. Each longitudinal tooling module (14) has a chord length smaller than the chord distance between the flange (2.2) of the spar (2) and the web (2.1) of the adjacent spar (2). Thus, each tooling module (14) can be removed through the gap between the flange (2.2) and the web (2.1) of the adjacent spar (2) between the first central portion (5) and the second central portion (6), i.e., through the opening (21).

In the next step, one of the at least two longitudinal tooling modules (14) is removed through the gap between the flange (2.2) and the web (2.1) of the adjacent spar (2) for the tooling modules (14) located under the opening (21) between the first central portion (5) and the second central portion (6).

The other tooling module (14) of the at least two longitudinal tooling modules (14) located under the flange (2.2) of the spar (2) is displaced in a chordwise direction towards the gap between the flange (2.2) and the web (2.1) of adjacent spar (2) and is then removed through the gap between the flange (2.2) and the web (2.1) of the adjacent spar (2).

## Claims

1. Composite multi-spar aircraft lifting surface, comprising an integrated torsion box (1) comprising:
- a first face (1.1) and a second face (1.2),
- a lateral right side (1.3) and a lateral left side (1.4) on each side of a longitudinal direction (20) of the torsion box (1), said longitudinal direction being a longitudinal axis contained in a symmetry plane of the torsion box (1),
- spars (2) running spanwise in the lateral left side (1.4),
- spars (2) running spanwise in the lateral right side (1.3), and
- a skin (3) forming the first face (1.1) and the second face (1.2),
- a first portion of the skin (3.1) being continuous on the second face (1.2) from a right tip (4.1) of the lateral right side (1.3) to a left tip (4.2) of the lateral left side (1.4),
- a second portion of the skin (3.2) being continuous on the lateral right side (1.3) of the first face (1.1), from the right tip (4.1) to a first central portion (5) of the torsion box (1),
- a third portion of the skin (3.3) being continuous on the lateral left side (1.4) of the first face (1.1), from the left tip (4.2) to a second central portion (6) of the torsion box (1),
- an opening (21) in the skin (3) of the first face (1.1) between the first central portion (5) and the second central portion (6),
- a cover (7) spanning at least partially onto the opening (21) between the first central portion (5) and the second central portion (6) of the torsion box (1),
- wherein the spars (2), the first portion of the skin (3.1), the second portion of the skin (3.2) and the third portion of the skin (3.3) are an integrated multi-cell part, each cell of the multi-cell part being formed by two consecutive spars (2) and the skin (3) formed by the continuous first face (1.1) and the continuous second face (1.2),
wherein the composite multi-spar aircraft lifting surface has been manufactured according to the method of claim 13.

2. Composite multi-spar aircraft lifting surface, according to claim 1, wherein the cover (7) is symmetrically located with respect to the longitudinal direction (20) of the torsion box (1).

3. Composite multi-spar aircraft lifting surface, according to any preceding claim, wherein the cover (7) is joined to the spars (2) by fastening means.

4. Composite multi-spar aircraft lifting surface, according to any preceding claim, wherein at least one spar (2) has an L-shaped cross-section comprising a web (2.1) and a lateral flange (2.2) extending laterally from the web (2.1), the chord length of the flange (2.2) being smaller than a chordwise distance between said spar (2) and a consecutive spar (2) in the direction of the lateral flange (2.2).

5. Composite multi-spar aircraft lifting surface, according to any preceding claim, wherein the second portion of the skin (3.2) and/or the third portion of the skin (3.3) comprises a sloped section (9) along the span direction such that an edge (3.2.1) of the second portion of the skin (3.2) adjacent to the first central portion (5) or an edge of the third portion of the skin (3.3) adjacent to the second central portion (6) is located between an edge of the cover (7) and one or more spars (2) and the slope section (9) is adapted for joining the cover (7) to, respectively, the second portion of the skin (3.2) and/or the third portion of the skin (3.3).

6. Composite multi-spar aircraft lifting surface, according to any of claims 1 to 4, wherein it comprises a strap (10) joined at the first central portion (5) by fastening means to:
- the cover (7), and
- the second portion of the skin (3.2).

7. Composite multi-spar aircraft lifting surface, according to claim 6, wherein the spars (2) comprise a recess (11) in a Z-direction along its span direction, the strap (10) being located in the recess (11) such that the strap (10) is located between the spars (2) and a portion of the cover (7) and the second portion of the skin (3.2).

8. Composite multi-spar aircraft lifting surface, according to claim 7, wherein the torsion box (1) comprises a stiffener (12) joined to the spar (2) along the span direction and adapted for stiffening the spar (2).

9. Composite multi-spar aircraft lifting surface, according to claim 8, wherein the recess (11) is deeper than the thickness of the strap (10) in the Z-direction and the stiffener (12) is fastened such that the strap (10) is pressed between the stiffener (12) and a portion of the cover (7) and the second portion of the skin (3.2).

10. Composite multi-spar aircraft lifting surface, according to claim 6, wherein the cover (7) and second portion of the skin (3.2) are located between the strap (10) and the spar (2) in a Z-direction.

11. Composite multi-spar aircraft lifting surface, according to any preceding claim, wherein the torsion box (1) comprises a rib (13) located between the lateral right side (1.3) and the lateral left side (1.4) of the torsion box (1), the rib (13) being fastened to the cover (7) and to the first portion of the skin (3.1).

12. Composite multi-spar aircraft lifting surface, according to claim 11, wherein the rib (13) comprises at least two parts:
- a first T-shaped portion (13.1) configured as part of the integrated multi-cell part together with the spars (2) and the first portion of the skin (3.1), and
- a second T-shaped part (13.2) fastened to the cover (7) and to the first T-shaped portion (13.1).

13. Method for manufacturing a composite multi-spar aircraft lifting surface, the lifting surface comprising an integrated torsion box (1) comprising:
- a first face (1.1) and a second face (1.2),
- a lateral right side (1.3) and a lateral left side (1.4) on each side of a longitudinal direction (20) of the torsion box (1), said longitudinal direction being a longitudinal axis contained in a symmetry plane of the torsion box (1),
- spars (2) running spanwise in the lateral left side (1.4),
- spars (2) running spanwise in the lateral right side (1.3), and
- a skin (3) forming the first face (1.1) and the second face (1.2),
the method **characterized in that** it comprises the following steps:
- in a first step, manufacturing the torsion box (1) as an integrated multi-cell part comprising:
∘ the spars (2),
∘ a first portion of the skin (3.1) being continuous on the second face (1.2) from a right tip (4.1) of the lateral right side (1.3) to a left tip (4.2) of the lateral left side (1.4),
∘ a second portion of the skin (3.2) being continuous on the lateral right side (1.3) of the first face (1.1), from the right tip (4.1) to a first central portion (5) of the torsion box (1), and
∘ a third portion of the skin (3.3) being continuous on the lateral left side (1.4) of the first face (1.1), from the left tip (4.2) to a second central portion (6) of the torsion box (1), leaving an opening (21) in the skin (3) between the first central portion (5) and the second central portion (6),
each cell of the multi-cell part being formed by two consecutive spars (2) and the skin (3) formed by the continuous first face (1.1) and the continuous second face (1.2),
- providing a set of consecutive longitudinal tooling modules (14) located between adjacent spars (2), such that the set of consecutive longitudinal tooling modules (14) extends along the span of the torsion box (1),
- curing the integrated multi-cell part,
- removing through the opening (21) at least one of the consecutive longitudinal tooling modules (14) located between the first central portion (5) and the second central portion (6),
- displacing in the span direction at least a next consecutive longitudinal tooling module (14) towards the opening (21) between the first central portion (5) and the second central portion (6),
- removing through the opening (21) the consecutive longitudinal tooling module (14),
- repeating the displacing and removing sequence until all the longitudinal tooling modules (4) have been removed through the opening (21),
- in a second step, fastening a cover (7) spanning at least partially onto the opening (21).

14. Method for manufacturing a composite multi-spar aircraft lifting surface, according to claim 13, wherein at least one spar (2) has an L-shaped cross-section comprising a web (2.1) and a lateral flange (2.2) extending laterally from the web (2.1), the chord length of the flange (2.2) being smaller than a chordwise distance between said spar (2) and a consecutive spar (2) in the direction of the lateral flange (2.2), the method further comprising the following steps:
- locating at least two longitudinal tooling modules (14) between two consecutive spars (2) in the chord direction, each longitudinal tooling module (14) having a chord length smaller than the chord distance between the flange (2.2) of the spar (2) and the web (2.1) of the adjacent spar (2) so that each longitudinal tooling module (14) can be removed through a gap between the flange (2.2) and the web (2.1) of the adjacent spar (2) and through the opening (21) between the first central portion (5) and the second central portion (6),
- removing one of the at least two longitudinal tooling modules (14) through the gap between the flange (2.2) and the web (2.1) of the adjacent spar (2) for the longitudinal tooling modules (14) located between the first central portion (5) and the second central portion (6),
- displacing the at least other longitudinal tooling module (14) located under the flange (2.2) of the spar (2) in a chordwise direction towards the gap between the flange (2.2) and the web (2.1) of the adjacent spar (2) and removing it through the gap between the flange (2.2) and the web (2.1) of the adjacent spar (2).

## Patentansprüche

1. Mehrholmige Flugzeugtragfläche aus Verbundwerkstoff, die einen integrierten Torsionskasten (1) umfasst, Folgendes umfassend:
- eine erste Fläche (1.1) und eine zweite Fläche (1.2),
- eine laterale rechte Seite (1.3) und eine laterale linke Seite (1.4) auf jeder Seite einer Längsrichtung (20) des Torsionskastens (1), wobei die Längsrichtung eine Längsachse ist, die in einer Symmetrieebene des Torsionskastens (1) enthalten ist,
- Holme (2), die in Spannweitenrichtung in der lateralen linken Seite (1.4) verlaufen,
- Holme (2), die in Spannweitenrichtung in der lateralen rechten Seite (1.3) verlaufen,
- eine Außenhaut (3), die die erste Fläche (1.1) und die zweite Fläche (1.2) bildet,
- wobei ein erster Abschnitt der Außenhaut (3.1) auf der zweiten Fläche (1.2) von einer rechten Spitze (4.1) der lateralen rechten Seite (1.3) zu einer linken Spitze (4.2) der lateralen linken Seite (1.4) durchgehend ist,
- wobei ein zweiter Abschnitt der Außenhaut (3.2) auf der lateralen rechten Seite (1.3) der ersten Fläche (1.1) von der rechten Spitze (4.1) zu einem ersten Mittelabschnitt (5) des Torsionskastens (1) durchgehend ist,
- wobei ein dritter Abschnitt der Außenhaut (3.3) auf der lateralen linken Seite (1.4) der ersten Fläche (1.1) von der linken Spitze (4.2) zu einem zweiten Mittelabschnitt (6) des Torsionskastens (1) durchgehend ist,
- eine Öffnung (21) in der Außenhaut (3) der ersten Fläche (1.1) zwischen dem ersten Mittelabschnitt (5) und dem zweiten Mittelabschnitt (6),
- eine Abdeckung (7), die sich zumindest teilweise auf die Öffnung (21) zwischen dem ersten Mittelabschnitt (5) und dem zweiten Mittelabschnitt (6) des Torsionskastens (1) erstreckt,
- wobei die Holme (2), der erste Abschnitt der Außenhaut (3.1), der zweite Abschnitt der Außenhaut (3.2) und der dritte Abschnitt der Außenhaut (3.3) ein integrierter Mehrzellenteil sind, wobei jede Zelle des Mehrzellenteils durch zwei aufeinanderfolgende Holme (2) gebildet wird und die Außenhaut (3) durch die durchgehende erste Fläche (1.1) und die durchgehende zweite Fläche (1.2) gebildet wird,
wobei die mehrholmige Flugzeugtragfläche aus Verbundwerkstoff gemäß dem Verfahren nach Anspruch 13 hergestellt wurde.

2. Mehrholmige Flugzeugtragfläche aus Verbundwerkstoff nach Anspruch 1, wobei die Abdeckung (7) in Bezug auf die Längsrichtung (20) des Torsionskastens (1) symmetrisch angeordnet ist.

3. Mehrholmige Flugzeugtragfläche aus Verbundwerkstoff nach einem der vorhergehenden Ansprüche, wobei die Abdeckung (7) durch Befestigungsmittel mit den Holmen (2) verbunden ist.

4. Mehrholmige Flugzeugtragfläche aus Verbundwerkstoff nach einem der vorhergehenden Ansprüche, wobei mindestens ein Holm (2) einen L-förmigen Querschnitt aufweist, der einen Steg (2.1) und einen lateralen Flansch (2.2), der sich lateral vom Steg (2.1) erstreckt, umfasst, wobei die Sehnenlänge des Flanschs (2.2) kleiner als der Sehnenabstand zwischen dem Holm (2) und einem in Richtung des lateralen Flanschs (2.2) darauffolgenden Holm (2) ist.

5. Mehrholmige Flugzeugtragfläche aus Verbundwerkstoff nach einem der vorhergehenden Ansprüche, wobei der zweite Abschnitt der Außenhaut (3.2) und/oder der dritte Abschnitt der Außenhaut (3.3) einen geneigten Abschnitt (9) entlang der Spannweitenrichtung umfasst, so dass eine Kante (3.2.1) des zweiten Abschnitts der Außenhaut (3.2) angrenzend an den ersten Mittelabschnitt (5) oder eine Kante des dritten Abschnitts der Außenhaut (3.3) angrenzend an den zweiten Mittelabschnitt (6) zwischen einer Kante der Abdeckung (7) und einem oder mehreren Holmen (2) angeordnet ist und der geneigte Abschnitt (9) dazu eingerichtet ist, die Abdeckung (7) mit dem zweiten Abschnitt der Außenhaut (3.2) bzw. dem dritten Abschnitt der Außenhaut (3.3) zu verbinden.

6. Mehrholmige Flugzeugtragfläche aus Verbundwerkstoff nach einem der Ansprüche 1 bis 4, wobei sie einen Riemen (10) umfasst, der durch Befestigungsmittel am ersten Mittelabschnitt (5) mit folgenden Elementen verbunden ist:
- der Abdeckung (7) und
- dem zweiten Abschnitt der Außenhaut (3.2).

7. Mehrholmige Flugzeugtragfläche aus Verbundwerkstoff nach Anspruch 6, wobei die Holme (2) eine Aussparung (11) in einer Z-Richtung entlang ihrer Spannweitenrichtung umfassen, wobei sich der Riemen (10) in der Aussparung (11) befindet, so dass sich der Riemen (10) zwischen den Holmen (2) und einem Abschnitt der Abdeckung (7) und dem zweiten Abschnitt der Außenhaut (3.2) befindet.

8. Mehrholmige Flugzeugtragfläche aus Verbundwerkstoff nach Anspruch 7, wobei der Torsionskasten (1) eine Versteifung (12) umfasst, die entlang der Spannweitenrichtung mit dem Holm (2) verbunden und zum Versteifen des Holms (2) ausgelegt ist.

9. Mehrholmige Flugzeugtragfläche aus Verbundwerkstoff nach Anspruch 8, wobei die Aussparung (11) tiefer als die Dicke des Riemens (10) in der Z-Richtung ist und die Versteifung (12) so befestigt ist, dass der Riemen (10) zwischen die Versteifung (12) und einen Abschnitt der Abdeckung (7) und den zweiten Abschnitt der Außenhaut (3.2) gedrückt wird.

10. Mehrholmige Flugzeugtragfläche aus Verbundwerkstoff nach Anspruch 6, wobei die Abdeckung (7) und der zweite Abschnitt der Außenhaut (3.2) in einer Z-Richtung zwischen dem Riemen (10) und dem Holm (2) angeordnet sind.

11. Mehrholmige Flugzeugtragfläche aus Verbundwerkstoff nach einem der vorhergehenden Ansprüche, wobei der Torsionskasten (1) eine Rippe (13) umfasst, die sich zwischen der lateralen rechten Seite (1.3) und der lateralen linken Seite (1.4) des Torsionskastens (1) befindet, wobei die Rippe (13) an der Abdeckung (7) und am ersten Abschnitt der Außenhaut (3.1) befestigt ist.

12. Mehrholmige Flugzeugtragfläche aus Verbundwerkstoff nach Anspruch 11, wobei die Rippe (13) mindestens zwei Teile umfasst:
- einen ersten T-förmigen Abschnitt (13.1), der als Teil des integrierten Mehrzellenteils zusammen mit den Holmen (2) und dem ersten Abschnitt der Außenhaut (3.1) ausgelegt ist, und
- einen zweiten T-förmigen Teil (13.2), der an der Abdeckung (7) und am ersten T-förmigen Abschnitt (13.1) befestigt ist.

13. Verfahren zum Herstellen einer mehrholmigen Flugzeugtragfläche aus Verbundwerkstoff, wobei die Tragfläche einen integrierten Torsionskasten (1) umfasst, umfassend:
- eine erste Fläche (1.1) und eine zweite Fläche (1.2),
- eine laterale rechte Seite (1.3) und eine laterale linke Seite (1.4) auf jeder Seite einer Längsrichtung (20) des Torsionskastens (1), wobei die Längsrichtung eine Längsachse ist, die in einer Symmetrieebene des Torsionskastens (1) enthalten ist,
- Holme (2), die in Spannweitenrichtung in der lateralen linken Seite (1.4) verlaufen,
- Holme (2), die in Spannweitenrichtung in der lateralen rechten Seite (1.3) verlaufen,
- eine Außenhaut (3), die die erste Fläche (1.1) und die zweite Fläche (1.2) bildet,
wobei das Verfahren **dadurch gekennzeichnet ist, dass** es die folgenden Schritte umfasst:
- in einem ersten Schritt Herstellen des Torsionskastens (1) als integrierter Mehrzellenteil, der Folgendes umfasst:
∘ die Holme (2),
∘ wobei ein erster Abschnitt der Außenhaut (3.1) auf der zweiten Fläche (1.2) von einer rechten Spitze (4.1) der lateralen rechten Seite (1.3) zu einer linken Spitze (4.2) der lateralen linken Seite (1.4) durchgehend ist,
∘ wobei ein zweiter Abschnitt der Außenhaut (3.2) auf der lateralen rechten Seite (1.3) der ersten Fläche (1.1) von der rechten Spitze (4.1) zu einem ersten Mittelabschnitt (5) des Torsionskastens (1) durchgehend ist und
∘ wobei ein dritter Abschnitt der Außenhaut (3.3) auf der lateralen linken Seite (1.4) der ersten Fläche (1.1) von der linken Spitze (4.2) zu einem zweiten Mittelabschnitt (6) des Torsionskastens (1) durchgehend ist, wobei eine Öffnung (21) in der Außenhaut (3) zwischen dem ersten Mittelabschnitt (5) und dem zweiten Mittelabschnitt (6) verbleibt,
wobei jede Zelle des Mehrzellenteils durch zwei aufeinanderfolgende Holme (2) gebildet wird und die Außenhaut (3) durch die durchgehende erste Fläche (1.1) und die durchgehende zweite Fläche (1.2) gebildet wird,
- Vorsehen eines Satzes aufeinanderfolgender Längswerkzeugmodule (14), die sich zwischen benachbarten Holmen (2) befinden, so dass sich der Satz aufeinanderfolgender Längswerkzeugmodule (14) entlang der Spannweite des Torsionskastens (1) erstreckt,
- Aushärten des integrierten Mehrzellenteils,
- Entfernen mindestens eines der aufeinanderfolgenden Längswerkzeugmodule (14), die sich zwischen dem ersten Mittelabschnitt (5) und dem zweiten Mittelabschnitt (6) befinden, durch die Öffnung (21),
- Verschieben mindestens eines nächsten aufeinanderfolgenden Längswerkzeugmoduls (14) in Spannweitenrichtung in Richtung der Öffnung (21) zwischen dem ersten Mittelabschnitt (5) und dem zweiten Mittelabschnitt (6),
- Entfernen des aufeinanderfolgenden Längswerkzeugmoduls (14) durch die Öffnung (21),
- Wiederholen der Verschiebe- und Entfernungsabfolge, bis alle Längswerkzeugmodule (4) durch die Öffnung (21) entfernt wurden,
- in einem zweiten Schritt Befestigen einer sich zumindest teilweise über die Öffnung (21) erstreckenden Abdeckung (7).

14. Verfahren zum Herstellen einer mehrholmigen Flugzeugtragfläche aus Verbundwerkstoff nach Anspruch 13, wobei mindestens ein Holm (2) einen L-förmigen Querschnitt aufweist, der einen Steg (2.1) und einen lateralen Flansch (2.2), der sich lateral vom Steg (2.1) erstreckt, umfasst, wobei die Sehnenlänge des Flanschs (2.2) kleiner als der Sehnenabstand zwischen dem Holm (2) und einem in Richtung des lateralen Flanschs (2.2) darauffolgenden Holm (2) ist, wobei das Verfahren ferner die folgenden Schritte umfasst:
- Anordnen von mindestens zwei Längswerkzeugmodulen (14) zwischen zwei in Sehnenrichtung aufeinanderfolgenden Holmen (2), wobei jedes Längswerkzeugmodul (14) eine Sehnenlänge aufweist, die kleiner als der Sehnenabstand zwischen dem Flansch (2.2) des Holms (2) und dem Steg (2.1) des benachbarten Holms (2) ist, so dass jedes Längswerkzeugmodul (14) durch einen Spalt zwischen dem Flansch (2.2) und dem Steg (2.1) des benachbarten Holms (2) und durch die Öffnung (21) zwischen dem ersten Mittelabschnitt (5) und dem zweiten Mittelabschnitt (6) entfernt werden kann,
- Entfernen eines der mindestens zwei Längswerkzeugmodule (14) durch den Spalt zwischen dem Flansch (2.2) und dem Steg (2.1) des benachbarten Holms (2) für die Längswerkzeugmodule (14), die sich zwischen dem ersten Mittelabschnitt (5) und dem zweiten Mittelabschnitt (6) befinden,
- Verschieben des mindestens einen anderen Längswerkzeugmoduls (14), das sich unter dem Flansch (2.2) des Holms (2) befindet, in einer Sehnenrichtung in Richtung des Spalts zwischen dem Flansch (2.2) und dem Steg (2.1) des benachbarten Holms (2) und Entfernen desselben durch den Spalt zwischen dem Flansch (2.2) und dem Steg (2.1) des benachbarten Holms (2).

## Revendications

1. Surface de sustentation d'aéronef en matériau composite à plusieurs longerons comprenant un caisson de torsion intégré (1) comprenant :
- une première face (1.1) et une seconde face (1.2),
- un côté latéral droit (1.3) et un côté latéral gauche (1.4) de part et d'autre d'une direction longitudinale (20) du caisson de torsion (1), ladite direction longitudinale étant un axe longitudinal contenu dans un plan de symétrie du caisson de torsion (1),
- des longerons (2) s'étendant en envergure sur le côté latéral gauche (1.4),
- des longerons (2) s'étendant en envergure sur le côté latéral droit (1.3), et
- un revêtement (3) formant la première face (1.1) et la seconde face (1.2),
- une première partie du revêtement (3.1) étant continue sur la seconde face (1.2) depuis une pointe droite (4.1) du côté latéral droit (1.3) jusqu'à une pointe gauche (4.2) du côté latéral gauche (1.4),
- une deuxième partie du revêtement (3.2) étant continue sur le côté latéral droit (1.3) de la première face (1.1) depuis la pointe droite (4.1) jusqu'à une première partie centrale (5) du caisson de torsion (1),
- une troisième partie du revêtement (3.3) étant continue sur le côté latéral gauche (1.4) de la première face (1.1) depuis la pointe gauche (4.2) jusqu'à une seconde partie centrale (6) du caisson de torsion (1),
- une ouverture (21) dans le revêtement (3) de la première face (1.1) entre la première partie centrale (5) et la seconde partie centrale (6),
- un couvercle (7) s'étendant au moins partiellement sur l'ouverture (21) entre la première partie centrale (5) et la seconde partie centrale (6) du caisson de torsion (1),
- dans laquelle les longerons (2), la première partie du revêtement (3.1), la deuxième partie du revêtement (3.2) et la troisième partie du revêtement (3.3) constituent une partie multicellulaire intégrée, chaque cellule de la partie multicellulaire étant formée par deux longerons (2) consécutifs et le revêtement (3) formé par la première face (1.1) continue et la seconde face (1.2) continue,
dans laquelle la surface de sustentation d'aéronef en matériau composite à plusieurs longerons a été fabriquée conformément au procédé selon la revendication 13.

2. Surface de sustentation d'aéronef en matériau composite à plusieurs longerons selon la revendication 1, dans laquelle le couvercle (7) est disposé symétriquement par rapport à la direction longitudinale (20) du caisson de torsion (1).

3. Surface de sustentation d'aéronef en matériau composite à plusieurs longerons selon l'une quelconque des revendications précédentes, dans laquelle le couvercle (7) est relié aux longerons (2) par des moyens de fixation.

4. Surface de sustentation d'aéronef en matériau composite à plusieurs longerons selon l'une quelconque des revendications précédentes, dans laquelle au moins un longeron (2) a une section transversale en forme de L comprenant une âme (2.1) et une semelle latérale (2.2) s'étendant latéralement à partir de l'âme (2.1), la longueur de corde de la semelle (2.2) étant inférieure à une distance dans le sens de la corde entre ledit longeron (2) et un longeron consécutif (2) dans la direction de la semelle latérale (2.2).

5. Surface de sustentation d'aéronef en matériau composite à plusieurs longerons selon l'une quelconque des revendications précédentes, dans laquelle la deuxième partie du revêtement (3.2) et/ou la troisième partie du revêtement (3.3) comprend une section en pente (9) dans le sens de l'envergure de telle sorte qu'un bord (3.2.1) de la deuxième partie du revêtement (3.2) adjacent à la première partie centrale (5) ou un bord de la troisième partie du revêtement (3.3) adjacent à la deuxième partie centrale (6) est situé entre un bord du couvercle (7) et un ou un ou plusieurs longerons (2) et la section en pente (9) est conçue pour relier le couvercle (7) respectivement à la deuxième partie du revêtement (3.2) et/ou à la troisième partie du revêtement (3.3).

6. Surface de sustentation d'aéronef en matériau composite à plusieurs longerons selon l'une quelconque des revendications 1 à 4, **caractérisée en ce qu'**elle comprend une sangle (10) reliée au niveau de la première partie centrale (5) par des moyens de fixation sur :
- le couvercle (7), et
- la deuxième partie du revêtement (3.2).

7. Surface de sustentation d'aéronef en matériau composite à plusieurs longerons selon la revendication 6, dans laquelle les longerons (2) comprennent un évidement (11) dans une direction Z dans le sens de son envergure, la sangle (10) étant située dans l'évidement (11) de telle sorte que la sangle (10) est située entre les longerons (2) et une partie du couvercle (7) et la deuxième partie du revêtement (3.2).

8. Surface de sustentation d'aéronef en matériau composite à plusieurs longerons selon la revendication 7, dans laquelle le caisson de torsion (1) comprend un raidisseur (12) relié au longeron (2) dans le sens de l'envergure et conçu pour rigidifier le longeron (2).

9. Surface de sustentation d'aéronef en matériau composite à plusieurs longerons selon la revendication 8, dans laquelle l'évidement (11) est plus profond que l'épaisseur de la sangle (10) dans la direction Z et le raidisseur (12) est fixé de telle sorte que la sangle (10) est pressée entre le raidisseur (12) et une partie du couvercle (7) et la deuxième partie du revêtement (3.2).

10. Surface de sustentation d'aéronef en matériau composite à plusieurs longerons selon la revendication 6, dans laquelle le couvercle (7) et la deuxième partie du revêtement (3.2) sont situés entre la sangle (10) et le longeron (2) dans une direction Z.

11. Surface de sustentation d'aéronef en matériau composite à plusieurs longerons selon l'une quelconque des revendications précédentes, dans laquelle le caisson de torsion (1) comprend une nervure (13) située entre le côté droit latéral (1.3) et le côté gauche latéral (1.4) du caisson de torsion (1), la nervure (13) étant fixée au couvercle (7) et à la première partie du revêtement (3.1).

12. Surface de sustentation d'aéronef en matériau composite à plusieurs longerons selon la revendication 11, dans lequel la nervure (13) comprend au moins deux parties :
- une première partie (13.1) en forme de T configurée comme partie de la partie multicellulaire intégrée avec les longerons (2) et la première partie du revêtement (3.1), et
- une seconde partie (13.2) en forme de T fixée au couvercle (7) et à la première partie (13.1) en forme de T.

13. Procédé de fabrication d'une surface de sustentation d'aéronef en matériau composite à plusieurs longerons, la surface de sustentation comprenant un caisson de torsion intégré (1) comprenant :
- une première face (1.1) et une seconde face (1.2),
- un côté latéral droit (1.3) et un côté latéral gauche (1.4) de part et d'autre d'une direction longitudinale (20) du caisson de torsion (1), ladite direction longitudinale étant un axe longitudinal contenu dans un plan de symétrie du caisson de torsion (1),
- des longerons (2) s'étendant en envergure sur le côté latéral gauche (1.4),
- des longerons (2) s'étendant en envergure sur le côté latéral droit (1.3), et
- un revêtement (3) formant la première face (1.1) et la seconde face (1.2),
le procédé étant **caractérisé en ce qu'**il comprend les étapes suivantes :
- lors d'une première étape, la fabrication du caisson de torsion (1) sous forme de partie multicellulaire intégrée comprenant :
∘ les longerons (2),
∘ une première partie du revêtement (3.1) étant continue sur la deuxième face (1.2) depuis une pointe droite (4.1) du côté latéral droit (1.3) jusqu'à une pointe gauche (4.2) du côté latéral gauche (1.4),
∘ une deuxième partie du revêtement (3.2) étant continue sur le côté latéral droit (1.3) de la première face (1.1) depuis la pointe droite (4.1) jusqu'à une première partie centrale (5) du caisson de torsion (1), et
∘ une troisième partie du revêtement (3.3) étant continue sur le côté latéral gauche (1.4) de la première face (1.1) depuis la pointe gauche (4.2) jusqu'à une seconde partie centrale (6) du caisson de torsion (1), laissant une ouverture (21) du revêtement (3) entre la première partie centrale (5) et la seconde partie centrale (6), chaque cellule de la partie multicellulaire étant formée par deux longerons (2) consécutifs et le revêtement (3) formé par la première face (1.1) continue et la seconde face (1.2) continue,
- la fourniture d'un ensemble de modules d'outillage longitudinaux (14) consécutifs situés entre des longerons (2) adjacents, de sorte que l'ensemble de modules d'outillage longitudinaux (14) consécutifs s'étend sur l'envergure du caisson de torsion (1),
- le durcissement de la pièce multicellulaire intégrée,
- le retrait à travers l'ouverture (21) d'au moins l'un des modules d'outillage longitudinaux (14) consécutifs situés entre la première partie centrale (5) et la seconde partie centrale (6),
- le déplacement dans le sens de l'envergure d'au moins un module d'outillage longitudinal (14) consécutif suivant vers l'ouverture (21) entre la première partie centrale (5) et la seconde partie centrale (6),
- le retrait à travers l'ouverture (21) du module d'outillage longitudinal (14) consécutif,
- la répétition de la séquence de déplacement et de retrait jusqu'au retrait de tous les modules d'outillage longitudinaux (4) à travers l'ouverture (21),
- lors d'une seconde étape, la fixation d'un couvercle (7) s'étendant au moins partiellement sur l'ouverture (21).

14. Procédé de fabrication d'une surface de sustentation d'aéronef en matériau composite à plusieurs longerons selon la revendication 13, dans lequel au moins un longeron (2) a une section transversale en forme de L comprenant une âme (2.1) et une semelle latérale (2.2) s'étendant latéralement à partir de l'âme (2.1), la longueur de corde de la semelle (2.2) étant inférieure à une distance dans le sens de la corde entre ledit longeron (2) et un longeron consécutif (2) dans la direction de la semelle latérale (2.2), le procédé comprenant en outre les étapes suivantes :
- le positionnement d'au moins deux modules d'outillage longitudinaux (14) entre deux longerons (2) consécutifs dans le sens de la corde, chaque module d'outillage longitudinal (14) présentant une longueur de corde inférieure à la distance de corde entre la semelle (2.2) du longeron (2) et l'âme (2.1) du longeron adjacent (2) de sorte que chaque module d'outillage longitudinal (14) peut être retiré à travers un espace entre la semelle (2.2) et l'âme (2.1) du longeron adjacent (2) et à travers l'ouverture (21) entre la première partie centrale (5) et la seconde partie centrale (6),
- le retrait de l'un des au moins deux modules d'outillage longitudinaux (14) dans l'espace entre la semelle (2.2) et l'âme (2.1) du longeron (2) adjacent pour les modules d'outillage longitudinaux (14) situés entre la première partie centrale (5) et la seconde partie centrale (6),
- le déplacement du ou des autres modules d'outillage longitudinaux (14) situés sous la semelle (2.2) du longeron (2) dans le sens de la corde vers l'espace entre la semelle (2.2) et l'âme (2.1) du longeron (2) adjacent et son retrait à travers l'espace entre la semelle (2.2) et l'âme (2.1) du longeron (2) adjacent.
